# EUROPEAN PATENT SPECIFICATION

(11) **EP 3 738 451 B1**
(45) Date of publication and mention of the grant of the patent: **09.03.2022**
(21) Application number: 19208753.4
(22) Date of filing: 13.11.2019
(51) Int. Cl.: A24F 40/40, A24F 40/20

(54) **VAPORIZER**
VERDAMPFER
VAPORISATEUR

(30) Priority: 13.05.2019 CN 201910395116; 13.05.2019 CN 201920676800 U
(43) Date of publication of application: 18.11.2020
(73) Proprietor: Liu, Tuanfang, 518000 Shenzhen, Guangdong (CN)
(72) Inventor: Liu, Tuanfang, 518000 Shenzhen, Guangdong (CN)
(74) Representative: Niburska, Danuta

(56) References cited:
- WO-A1-2019/014991
- CN-A- 108 936 812
- CN-A- 108 968 154

## Description

The disclosure relates to a vaporizer.

A vaporizer, colloquially known as a vape, is a device used to vaporize substances such as tobacco for inhalation.

Said vaporizers are known in the art, see e.g. CN 108 936 812.

The disclosure provides a vaporizer.

The vaporizer comprises a cover; a first sleeve; a silicone gasket; a first heating unit; a second heating unit; a first support supporting the first heating unit; a second support supporting the second heating unit; two electrodes; a third support supporting the two electrodes; a printed circuit board; a silicone seal; a pneumatic switch; a fourth support supporting the pneumatic switch; a second sleeve; a thread ring; a button; a support frame; a base frame; a control plate; a light guide column; a battery; a first end cover; and a second end cover.

The cover is disposed on a side wall of the base frame and is capable of turning inside out with respect to the side wall; the first sleeve is disposed in the base frame and comprises an opening configured to receive a cigarette, and the cover is adapted to cover or uncover the opening; the silicone gasket is disposed in the first sleeve; the first heating unit is disposed on the first support; and the first heating unit and the first support are disposed in the first sleeve; the second heating unit is disposed on the second support; the two electrodes are disposed on the third support; and the two electrodes and the third support are disposed in the second support; the second support is disposed in the base frame; the silicone seal sleeves the printed circuit board; the printed circuit board is disposed on the fourth support; the pneumatic switch, the second sleeve, and the thread ring are embedded sequentially in that order in the fourth support; and the fourth support is screwed to the second support; and the light guide column is disposed on the control plate, and the control plate is disposed on the base frame; the button is disposed in the support frame; the battery is disposed in the base frame; and the first end cover and the second end cover are disposed on two opposite sides of the base frame, respectively.

Advantages of the vaporizer according to embodiments of the disclosure are summarized as follows. The cover is disposed on the side wall of the base frame and is capable of turning inside out with respect to the side wall and is next to the opening of the base frame. The first sleeve is disposed in the base frame and comprises an opening. A cigarette can be inserted in the first sleeve via the opening and contacts the first heating unit. Press the button can power on the vaporizer, and the first heating unit starts to work and vaporize the cigarette. Upon inhaling, the vapor activates the pneumatic switch and the second heating unit starts to vaporize the cigarette. Thus, the side and the bottom of the cigarette can be synchronously heated by the first heating unit and the second heating unit, respectively, which can accelerate the volatilization and degradation of harmful substances in the cigarette.

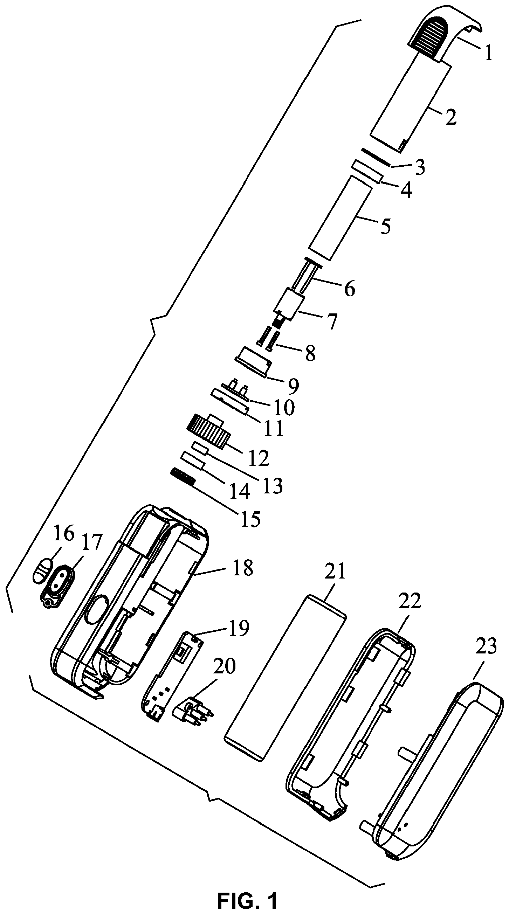

FIG. 1 is an exploded view of a vaporizer according to one embodiment of the disclosure;

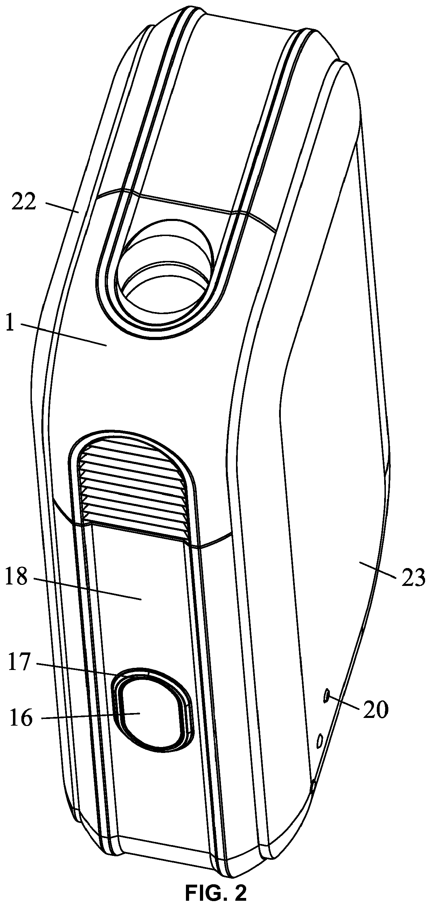

FIG. 2 is a schematic diagram of a vaporizer according to one embodiment of the disclosure; and

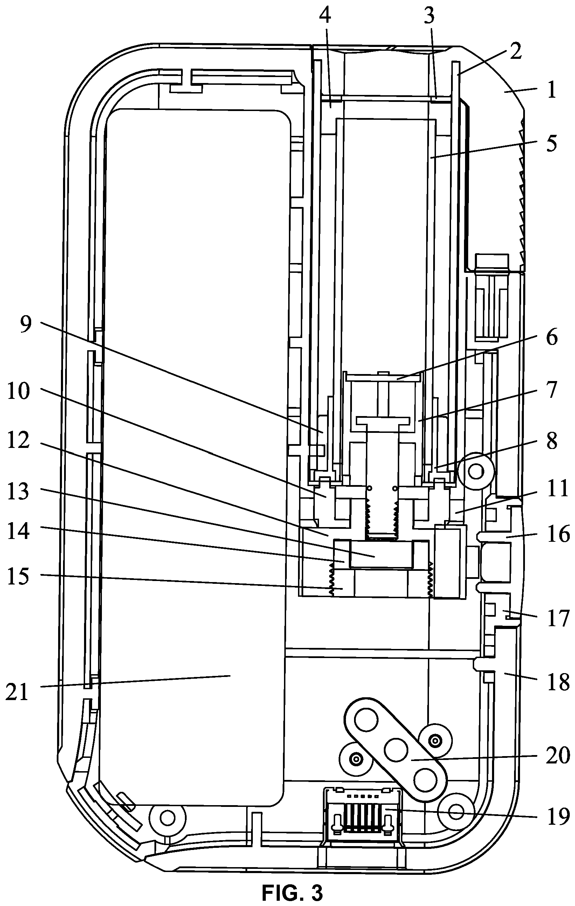

FIG. 3 is a sectional view of a vaporizer according to one embodiment of the disclosure.

To further illustrate, embodiments detailing a vaporizer are described below. It should be noted that the following embodiments are intended to describe and not to limit the disclosure.

A vaporizer comprises a cover 1; a first sleeve 2; a silicone gasket 3; a first heating unit 5; a second heating unit 6; a first support 4 supporting the first heating unit 5; a second support 7 supporting the second heating unit 6; two electrodes 8; a third support 9 supporting the two electrodes 8; a printed circuit board 10; a silicone seal 11; a pneumatic switch 13; a fourth support 12 supporting the pneumatic switch 13; a second sleeve 14; a thread ring 15; a button 16; a support frame 17; a base frame 18; a control plate 19; a light guide column 20; a battery 21; a first end cover 22; and a second end cover 23.

The cover 1 is disposed on a side wall of the base frame 18 and is capable of turning inside out with respect to the side wall; the first sleeve 2 is disposed in the base frame 18 and comprises an opening configured to receive a cigarette, and the cover 1 is adapted to cover or uncover the opening; the silicone gasket 3 is disposed in the first sleeve 2; the first heating unit 5 is disposed on the first support 4; and the first heating unit 5 and the first support 4 are disposed in the first sleeve 2; the second heating unit 6 is disposed on the second support 7; the two electrodes 8 are disposed on the third support 9; and the two electrodes 8 and the third support 9 are disposed in the second support 7; the second support 7 is disposed in the base frame 18; the silicone seal 11 sleeves the printed circuit board 10; the printed circuit board 10 is disposed on the fourth support 12; the pneumatic switch 13, the second sleeve 14, and the thread ring 15 are embedded sequentially in that order in the fourth support 12; and the fourth support 12 is screwed to the second support 7; and the light guide column 20 is disposed on the control plate 19, and the control plate 19 is disposed on the base frame 18; the button 16 is disposed in the support frame 17; the battery 21 is disposed in the base frame 18; and the first end cover 22 and the second end cover 23 cover two opposite sides of the base frame 18, respectively.

The cover 1 is disposed on the side wall of the base frame 18 and is capable of turning inside out with respect to the side wall and is next to the opening of the base frame. The first sleeve 2 is disposed in the base frame and comprises an opening. A cigarette can be inserted in the first sleeve 2 via the opening and contacts the first heating unit 5. Press the button can power on the vaporizer, and the first heating unit 5 starts to work and vaporize the cigarette. Upon inhaling, the vapor activates the pneumatic switch 13 and the second heating unit 6 starts to vaporize the cigarette. Thus, the side and the bottom of the cigarette can be synchronously heated by the first heating unit 5 and the second heating unit 6, respectively, which can accelerate the volatilization and degradation of harmful substances in the cigarette.

## Claims

1. A device, comprising:
1)a cover (1);
2)a first sleeve (2);
3)a silicone gasket (3);
4)a first heating unit (5);
5)a second heating unit (6);
6)a first support (4) supporting the first heating unit (5);
7)a second support (7) supporting the second heating unit (6);
8)two electrodes (8);
9)a third support (9) supporting the two electrodes (8);
10) a printed circuit board (10);
11) a silicone seal (11);
12) a pneumatic switch (13);
13) a fourth support (12) supporting the pneumatic switch (13);
14) a second sleeve (14);
15) a thread ring (15);
16) a button (16);
17) a support frame (17);
18) a base frame (18);
19) a control plate (19);
20) a light guide column (20);
21) a battery (21);
22) a first cover (22); and
23) a second cover (23);
wherein:
the cover (1) is disposed on a side wall of the base frame (18) and is capable of turning inside out with respect to the side wall;
the first sleeve (2) is disposed in the base frame (18) and comprises an opening configured to receive a cigarette, and the cover (1) is adapted to cover or uncover the opening;
the silicone gasket (3) is disposed in the first sleeve (2);
the first heating unit (5) is disposed on the first support (4); and the first heating unit (5) and the first support (4) are disposed in the first sleeve (2);
the second heating unit (6) is disposed on the second support (7);
the two electrodes (8) are disposed on the third support (9); and the two electrodes (8) and the third support (9) are disposed in the second support (7);
the second support (7) is disposed in the base frame (18);
the silicone seal (11) sleeves the printed circuit board (10); the printed circuit board (10) is disposed on the fourth support (12);
the pneumatic switch (13), the second sleeve (14), and the thread ring (15) are embedded sequentially in that order in the fourth support (12); and the fourth support (12) is screwed to the second support (7); and
the light guide column (20) is disposed on the control plate (19), and the control plate (19) is disposed on the base frame (18); the button (16) is disposed in the support frame (17); the battery (21) is disposed in the base frame (18); and the first cover (22) and the second cover (23) cover two opposite sides of the base frame (18), respectively.

## Patentansprüche

1. Vorrichtung, umfassend:
1)eine Abdeckung (1);
2)eine erste Hülse (2);
3)eine Silikondichtung (3);
4)eine erste Heizeinheit (5);
5)eine zweite Heizeinheit (6);
6)einen ersten Träger (4), der die erste Heizeinheit (5) trägt;
7)einen zweiten Träger (7), der die zweite Heizeinheit (6) trägt;
8)zwei Elektroden (8);
9)einen dritten Träger (9), der die beiden Elektroden (8) trägt;
10) eine Leiterplatte (10);
11) eine Silikondichtung (11);
12) einen pneumatischen Schalter (13);
13) ein vierter Träger (12), der den pneumatischen Schalter (13) trägt;
14) eine zweite Hülse (14);
15) einen Gewindering (15);
16) eine Taste (16);
17) einen Stützrahmen (17);
18) einen Basisrahmen (18);
19) eine Steuerplatte (19);
20) eine Lichtleitsäule (20);
21) eine Batterie (21);
22) eine erste Abdeckung (22); und
23) eine zweite Abdeckung (23);
wobei:
die Abdeckung (1) an einer Seitenwand des Basisrahmens (18) angeordnet ist und in Bezug auf die Seitenwand umgekrempelt werden kann;
die erste Hülle (2) in dem Basisrahmen (18) angeordnet ist und eine Öffnung umfasst, die konfiguriert ist, um eine Zigarette aufzunehmen, und die Abdeckung (1) angepasst ist, um die Öffnung abzudecken der zu freizugeben;
die Silikondichtung (3) ist in der ersten Hülse (2) angeordnet;
die erste Heizeinheit (5) auf dem ersten Träger (4) angeordnet ist; und die erste Heizeinheit (5) und der erste Träger (4) in der ersten Hülse (2) angeordnet sind;
die zweite Heizeinheit (6) auf dem zweiten Träger (7) angeordnet ist;
die beiden Elektroden (8) auf dem dritten Träger (9) angeordnet sind; und die zwei Elektroden (8) und der dritte Träger (9) in dem zweiten Träger (7) angeordnet sind;
der zweite Träger (7) im Basisrahmen (18) angeordnet ist;
die Silikondichtung (11) die Leiterplatte (10) ummantelt; die Leiterplatte (10) auf dem vierten Träger (12) angeordnet ist;
der pneumatische Schalter (13), die zweite Hülse (14) und der Gewindering (15) nacheinander in dieser Reihenfolge in den vierten Träger (12) eingebettet sind; und der vierte Träger (12) mit dem zweiten Träger (7) verschraubt ist; und
die Lichtleitersäule (20) auf der Steuerplatte (19) angeordnet ist, und die Steuerplatte (19) auf dem Basisrahmen (18) angeordnet ist; die Taste (16) im Stützrahmen (17) angeordnet ist; die Batterie (21) im Basisrahmen (18) angeordnet ist; und die erste Abdeckung (22) und die zweite Abdeckung (23) jeweils zwei gegenüberliegende Seiten des Basisrahmens (18) abdecken.

## Revendications

1. Dispositif comprenant :
1)un couvercle (1) ;
2)un premier manchon (2) ;
3)une garniture en silicone (3) ;
4)une première unité de chauffe (5) ;
5)une deuxième unité de chauffe (6) ;
6)un premier support (4) qui supporte la première unité de chauffe (5) ;
7)un deuxième support (7) qui supporte la deuxième unité de chauffe (6) ;
8)deux électrodes (8) ;
9)un troisième support (9) qui supporte les deux électrodes (8) ;
10) un circuit imprimé (10) ;
11) un joint en silicone (11) ;
12) un commutateur pneumatique (13) ;
13) un quatrième support (12) qui supporte le commutateur pneumatique (13) ;
14) un deuxième manchon (14) ;
15) un anneau fileté (15) ;
16) un bouton (16) ;
17) un châssis de support (17) ;
18) un châssis de base (18) ;
19) une plaque de contrôle (19) ;
20) une colonne de guidage de lumière (20) ;
21) une batterie (21) ;
22) un premier couvercle (22) ; et
23) un deuxième couvercle (23) ;
dans lequel :
le couvercle (1) est disposé sur une paroi latérale du châssis de base (18) et peut être inversé par rapport à la paroi latérale ;
le premier manchon (2) est disposé dans le châssis de base (18) et comprend une ouverture configurée pour recevoir une cigarette, et le couvercle (1) est adapté pour recouvrir ou découvrir l'ouverture ;
la garniture en silicone (3) est disposée dans le premier manchon (2) ;
la première unité de chauffe (5) est disposée sur le premier support (4) ; et la première unité de chauffe (5) et le premier support (4) sont disposés dans le premier manchon (2) ;
la deuxième unité de chauffe (6) est disposée sur le deuxième support (7) ;
les deux électrodes (8) sont disposées sur le troisième support (9) ; et les deux électrodes (8) et le troisième support (9) sont disposés dans le deuxième support (7) ;
le deuxième support (7) est disposé dans le châssis de base (18) ;
le joint en silicone (11) constitue un manchon pour le circuit imprimé (10) ; le circuit imprimé (10) est disposé sur le quatrième support (12) ;
le commutateur pneumatique (13), le deuxième manchon (14) et l'anneau fileté (15) sont intégrés séquentiellement dans cet ordre dans le quatrième support (12) ; et le quatrième support (12) est vissé sur le deuxième support (7) ; et
la colonne de guidage de lumière (20) est disposée sur la plaque de contrôle (19), et la plaque de contrôle (19) est disposée sur le châssis de base (18) ; le bouton (16) est disposé dans le châssis de support (17) ; la batterie (21) est disposée dans le châssis de base (18) ; et le premier couvercle (22) et le deuxième couvercle (23) recouvrent respectivement deux côtés opposés du châssis de base (18).
